# EUROPÄISCHE PATENTSCHRIFT

(11) **EP 3 730 345 B1**
(45) Veröffentlichungstag und Bekanntmachung des Hinweises auf die Patenterteilung: **13.07.2022**
(21) Anmeldenummer: 19170685.2
(22) Anmeldetag: 23.04.2019
(51) Int. Cl.: B60P 1/04

(54) **FAHRZEUG, INSBESONDERE BAUFAHRZEUG, MIT EINEM FAHRZEUGRAHMEN UND EINER VERSCHWENKBAREN LASTAUFNAHME**
VEHICLE, IN PARTICULAR CONSTRUCTION VEHICLE, WITH A FRAME AND A PIVOTABLE LOAD HOLDER
VÉHICULE, EN PARTICULIER ENGIN DE TRAVAUX PUBLICS, DOTÉ D'UN CADRE DE VÉHICULE ET D'UNE UNITÉ DE RÉCEPTION DE MATÉRIAU POUVANT PIVOTER

(43) Veröffentlichungstag der Anmeldung: 28.10.2020
(73) Patentinhaber: Wacker Neuson Linz GmbH, 4063 Hörsching (AT)
(72) Erfinder: ERLINGER, Thomas, 4175 Herzogsdorf (AT)
(74) Vertreter: Otten, Roth, Dobler & Partner mbB Patentanwälte

(56) Entgegenhaltungen:
- DE-A1- 4 226 969
- DE-A1-102006 046 329
- JP-A- S59 140 137
- JP-A- S60 163 742
- US-A- 4 213 726

## Beschreibung

Die Erfindung betrifft ein Fahrzeug, insbesondere Land- oder Baufahrzeug wie einen Raddumper, Kompaktraddumper, Muldenkipper oder dergleichen nach dem Oberbegriff des Anspruchs 1. Dokument JPS59 140137 offenbart einen Raddumper mit ein Paar Kippstützräder gemäß den Oberbegriff.

Raddumper, insbesondere Kompaktraddumper sind meist knickgelenkte Fahrzeuge mit zwei Achsen. Die Kippmulde ist oft in Fahrtrichtung vorn angeordnet, es gibt jedoch auch Dumper mit in Fahrtrichtung hinten angeordneter Mulde oder mit drehbarer Fahrerplattform oder Fahrerkabine, so dass beide Anordnungen möglich sind.

Die Anforderungen an derartige Fahrzeuge sind hoch, vor allem hinsichtlich der Nutzlast, Wendigkeit, Gewichtsverteilung, Standsicherheit und Geländetauglichkeit. Durch diese vielseitigen Anforderungen sind die herkömmlichen Fahrzeuge hinsichtlich der Standsicherheit nicht in allen Betriebszuständen zufriedenstellend.

Unfälle entstehen meist durch einen ungünstigen Beladungszustand, vor allem durch Schwerpunktsverlagerungen beim Kippvorgang, beim Fahren in steilem Gelände oder nachgiebigem Gelände durch Einsinken der Laufräder, durch starke Bremsmanöver oder unvorhergesehenes Verhalten der Ladung. So kann sich festgefrorenen Erde oder lehmige Erde oft beim Kippvorgang nicht ausreichend von der Mulde lösen. Derartige Fahrzeuge unterscheiden sich von anderen Fahrzeugen wie einem Radlader oder Bagger mit einem Fahrzeugrahmen und einem Antriebsmotor, insbesondere Verbrennungsmotor und/oder Elektromotor und/oder Hydraulikmotor, bei denen ein Fahrzeugrahmen und wenigstens zwei Radachsen vorgesehen sind, durch wenigstens eine am Fahrzeugrahmen befestigte durch eine erste Verstelleinheit um eine Kippachse verschwenkbare Lastaufnahme wie eine Mulde zum Aufnehmen/Speichern von Material, insbesondere von schüttbarem Baumaterial, wobei die Lastaufnahme in Transportstellung wenigstens teilweise in einem Zwischenbereich zwischen zwei Radachsen angeordnet ist und in eine Kippstellung wenigstens teilweise über eine der Radachsen hinweg in einen Randbereich schwenkbar ist. Der Zwischenraum ist dabei durch zwei senkrecht zur einer Verbindungslinie der beiden Radachsen durch die Radachsen verlaufende Ebenen gebildet, während der Randbereich sich auf einer dem Zwischenbereich gegenüberliegenden Seite von einer der beiden den Zwischenraum begrenzenden Ebene, also auf der Vorder- oder Rückseite des Fahrzeugs befindet

Aufgabe der Erfindung ist es, die Sicherheit solcher Fahrzeuge zu verbessern.

Diese Aufgabe wird ausgehend von einem Fahrzeug nach dem Oberbegriff des Anspruchs 1 durch dessen kennzeichnende Merkmale gelöst.

Dementsprechend zeichnet sich ein erfindungsgemäßes Fahrzeug dadurch aus dass der Rahmen wenigstens eine Stützeinheit mit wenigstens einem um eine dritte Radachse, insbesondere eine dritte Starrachse, drehbaren Stützrad zum Abstützen des Fahrzeugs bzw. des Fahrzeugrahmens umfasst, wobei das wenigstens eine Stützrad lenkbar ausgebildet ist.

Durch diese Stützeinheit kann das Fahrzeug gegen unbeabsichtigtes Verkippen bei einer Schwerpunktsverschiebung über die durch die Laufräder gebildete Aufstandsfläche hinaus oder beim Auftreten eines ungewollten Impulses durch Bremsen oder eine Ladungsverschiebung gesichert werden. So wird mittels der durch das Stützrad fahrbaren Stützeinheit neben der Standsicherheit auch die Fahrsicherheit bei hoher Last verbessert. Durch die Ausgestaltung der Stützeinheit mit wenigstens einem, um eine dritte Radachse drehbaren Stützrad kann die Stützeinheit mühelos Bewegungen des Fahrzeugs folgen. In entsprechender Ausgestaltung kann ein solches Stützrad auch in der Transportstellung der Lastaufnahme als zusätzliche Stütze eingesetzt werden, um die Achslastverteilung des Fahrzeugs beim Transport zu verbessern und damit gegebenenfalls auch die Nutzlast zu erhöhen.

Von Vorteil ist dabei, dass das wenigstens eine Stützrad, vorzugsweise zwei Stützräder lenkbar sind, um einen Schlupf und den damit verbundenen Verschleiß in einer Kurvenbewegung zu vermeiden. Außerdem werden Fahrspuren in weichem Boden dadurch verringert.

Durch die in den Unteransprüchen genannten Maßnahmen sind vorteilhafte Weiterbildungen und Ausführungen der Erfindung möglich.

Eine Weiterbildung des erfindungsgemäßen Fahrzeugs weist wenigstens eine erste Rahmeneinheit und eine zweite Rahmeneinheit auf, wobei die erste Rahmeneinheit wenigstens eine erste Radachse, insbesondere eine erste Starrachse, mit wenigstens zwei ersten Laufrädern und die zweite Rahmeneinheit wenigstens eine zweite Radachse, insbesondere eine zweite Starrachse, mit wenigstens zwei zweiten Laufrädern umfasst und eine Knicklenkung oder Rahmenlenkung zum Lenken des Fahrzeugs bzw. der Fahrzeugrahmeneinheiten zwischen den beiden Rahmeneinheiten aufweist, wobei eine der Radachsen zwischen dem Stützrad der Stützeinheit und der Knickachse der Knick-oder Rahmenlenkung angeordnet ist und wobei wenigstens eine Zusatzlenkung zum Lenken des/der Stützräder vorgesehen ist. Ein solches Fahrzeug ist als sogenannter Knicklenker oder Rahmenlenker bekannt und zeigt neben einer großen Wendigkeit bei guter Geländetauglichkeit den Vorteil auf, dass Starrachsen gut verwendbar sind, die eine hohe Achslast erlauben.

Allerdings findet bei diesen Fahrzeugen beim Einschlagen der Lenkung eine seitliche Schwerpunktsverschiebung und zugleich eine Verkürzung der wirksamen Fahrzeuglänge und somit eine Verminderung des Drehmomentes statt, das dem Kippen des Fahrzeugs beim Abkippen der Last mit der damit verbundenen Verschiebung des Schwerpunktes in Richtung der Schwenkbewegung der Mulde entgegenwirkt. Bei solchen Fahrzeugen ist die erfindungsgemäße Verbesserung der Stand- und Fahrsicherheit daher besonders nützlich.

Durch die Ausgestaltung der Lenkung der Stützeinheit als Knick- oder Rahmenlenkung ist diese Lenkung, die ja wenigstens ein Stützrad an einer dritten Radachse lenkt, auf einfache Weise wahlweise als Nachlauflenkung oder bei Verwendung eines Lenkantriebs wie einem Antriebszylinder oder dergleichen als aktive Lenkung auszubilden.

Vorzugsweise werden weiterhin wenigstens zwei Stützräder an einer dritten Starrachse verwendet. Dadurch wird die Stützfläche der Stützeinheit am Boden vergrößert und die zusätzliche Achslast entsprechend erhöht.

Weiterhin wird in der o.a. Ausgestaltung der Erfindung die Verwendung einer Starrachse ermöglicht, die bei geringem Aufwand eine vergleichsweise hohe Achslast in zulässiger Weise erlaubt. In einer Weiterbildung der Erfindung wird weiterhin die dritte Radachse als Pendelachse ausgebildet, indem sie mit einem Pendelgelenk verbunden wird. Durch diese Maßnahme wird eine Achsenverschränkung der dritten Radachse möglich und damit die Geländetauglichkeit des Fahrzeugs verbessert.

Eine vorteilhafte Weiterbildung einer als Knick-oder Rahmenlenkung ausgebildeten Lenkung der Stützeinheit ergibt sich dadurch, dass die Lenkung der dritten Radachse wenigstens eine gelenkige Stablenker-Anordnung in Trapez-Geometrie mit wenigstens zwei in Trapezanordnung mit einer Rahmeneinheit und der dritten Starrachse verbundenen Stablenkern umfasst, wobei zwischen den Stablenkern und/oder einem Stablenker und der Rahmeneinheit bzw. der dritten Starrachse jeweils eine Lenkgelenk, insbesondere eine Lenkachse angeordnet ist. Bevorzugt werden vier Stablenker verwendet, wobei eine drehfest mit der Radachse und einer drehfest mit der Rahmeneinheit verbunden ist. Durch eine solche Ausgestaltung kann zum einen bei unterschiedlichen Kurvenradien eine Achsausrichtung der dritten Radachse auf den Schnittpunkt der Verlängerungslinien der beiden anderen Radachsen sichergestellt werden, was für eine schlupffreie Kurvenfahrt, bei der alle Achsen um den gleichen Drehpunkt fahren, notwendig ist.

Hierzu wird bevorzugt zusätzlich eine Kopplungsvorrichtung, z. B. durch hydraulische Kopplung zweier hydraulischer Antriebe, insbesondere zweier Hydraulikzylinder vorgesehen, um die gewünschte Achsenausrichtung zwangsweise zu bewirken.

Zudem kann durch diese Trapezlenkeranordnung auch eine Steuerung verwirklicht werden, bei der das kurveninnere Laufrad in den Zwischenbereich zwischen den beiden vorgeordneten Laufrädern einfährt, so dass ein kurzer Achsabstand von der zweiten Radachse zur dritten Radachse möglich ist.

Vorzugsweise wird wenigsterns eine zweite Verstelleinheit zum Verstellen oder ändern einer Schwenkposition und/oder einer Länge und /oder einer Stützkraft der Stützeinheit vorgesehen. Dadurch kann die Stützeinheit in eine Fahrtposition ohne Bodenkontakt gebracht werden, was insbesondere bei lastfreier Fahrt von Vorteil ist, um den Verschleiß zu verringern. Eine Längenverstellung erlaubt die Anpassung der Stützfläche an die Position der Kipplast in der Lastaufnahme. Eine Anpassung der Stützkraft im Bodenkontakt des Stützrades erlaubt Anpassungen der Achslast des Stützrades.

Vorteilhafterweise wird hierzu die Stützeinheit nicht nur horizontal, sondern auch vertikal schwenkbar und/oder längenverstellbar mit dem Fahrzeugrahmen verbunden. Dadurch kann die Stützeinheit an unterschiedliche Verhältnisse angepasst werden. So kann sie beispielsweise in einer Transportstellung mit wenig Last nach oben unter das Fahrzeug verschwenkt und nur bei Bedarf als Stütze oder lastaufnehmende Achse eingesetzt werden. Auch eine Anpassung an unterschiedliche Bodenverhältnisse, wie Gefälle, Unebenheiten oder dergleichen ist dadurch möglich. Auch einem nachgebenden Boden kann durch Nachstellen der Stützeinheit gefolgt werden. Die Standsicherheit beim Übergang in die Kippstellung wird dadurch erheblich verbessert.

Weiterhin kann die Verstelleinheit der Stützeinheit mit einem Ausleger des Rahmens verbunden sein, an dem die Lastaufnahme schwenkbar befestigt ist. Die Stützeinheit ist damit soweit im Randbereich des Fahrzeugs positionierbar, dass sie idealerweise unterhalb der in Kippstellung befindlichen Lastaufnahme am Boden aufliegt. So kann jedes unerwünschte, auf das Fahrzeug einwirkende Kippmoment vermieden und zugleich der Lagerort für die Last im Randbereich des Fahrzeugs frei gehalten werden.

Vorteilhafterweise ist ein elektrischer und/oder hydraulischer Antrieb für die zweite Verstelleinheit bzw. die Verstelleinheit der Stützeinheit vorgesehen. Dadurch wird die Betätigung dieser Verstelleinheit erleichtert.

Die Betätigung selbst kann dann manuell z.B. durch einen Betätigungsknopf oder Hebel oder automatisch erfolgen.

Für eine automatisch Betätigung der Stützeinheit wird vorteilhafterweise eine automatische, hydraulische und/oder elektrische bzw. elektronische Steuereinheit vorgesehen, die eine Betätigung der Stützeinheit, insbesondere eine Längen- und/oder Schwenkverstellung abhängig von einer oder mehreren Steuergrößen durchführt. So kann eine Verstellung abhängig von einem Zylinderdruck, der Fahrzeugneigung, einer Bremsverzögerung bzw. einem Bremsdruck oder einer Lastveränderung, insbesondere einer Achsentlastung erfolgen.

Hierzu werden entsprechende Sensoren wie ein Neigungssensor und/oder ein Drucksensor und/oder ein Kraftsensor wie ein Kraftmessbolzen, ein Dehnungsmessstreifen oder dergleichen vorgesehen.

Vorteilhafter Weise kann die zweite Verstelleinheit auch einen Betriebsmodus als automatische, hydropneumatische Federung aufweisen. Dies ist beispielsweise dann der Fall, wenn eine vorgegebene Stützkraft durch die Steuerungseinheit eingehalten wird und dadurch die Schwenkposition und/oder Länge der Stützeinheit automatisch nachgefahren wird. So wird beim Anfahren an Bodenunebenheiten, z. B. an eine Böschung die Verstelleinheit automatisch durch das Anfahren angehoben. Beim Anfahren an eine abfallende Hangkante wiederum fährt die Verstelleinheit dann nach unten nach. So wird auuch in diesen Situationen die Sicherheitsfunktion gewährleistet.

Weiterhin ist es insbesondere bei einem solchen Betriebsmodus von Vorteil, wenn bei Erreichen einer Endstellung der Stützeinheit der Fahrantrieb des Fahrzeugs wenigstens in eine Fahrtrichtung gestoppt wird. So kann beim Anfahren an eine ansteigende Böschung eine Überlastung der Stützeinheit vermieden werden. Beim Anfahren an eine abfallende Hangkante kann das Überfahren diese Kante und ein damit verbundener instabiler Fahrzeugzustand unterbunden werden.

Weiterhin kann die Größe des Stützrades oder der Stützräder und der Achsabstand der dritten Achse zur ersten oder zweiten Radachse so gewählt werden, dass sich in der Seitenansicht das oder die Stützräder mit den jeweiligen Laufrädern des Fahrzeugs überschneiden. Dies ermöglicht größere Stützräder, was wiederum bei Fahrten im Gelände bzw. weichem oder unebenem Boden von Vorteil ist.

Im Falle mehrerer, beispielsweise zweier Stützräder kann hierzu die Länge der dritten Radachse kleiner als die Länge der zur dritten Radachse benachbarten Radachse sein. Dadurch kann die Stützeinheit mit ihren dritten Laufrädern wenigstens teilweise zwischen den Laufrädern der benachbarten Radachse angeordnet werden.

Eine weitere Verbesserung des erfindungsgemäßen Fahrzeugs ergibt sich dadurch, dass das die Stützeinheit einen Hilfsantriebsmotor und/oder eine Hilfsbremse für das wenigstens eine Stützrad aufweist. Dies verbessert die Traktion bei Beschleunigung, Verzögerung und Kurvenfahrt und verbessert damit die Geländegängigkeit des Fahrzeugs.

Bevorzugt wird ein solcher Hilfsmotor als elektrischer oder hydraulischer Motor ausgeführt, um die Gesamtleistung der Verbrennermotoren des Fahrzeugs nicht zu erhöhen. Hierdurch ist insbesondere die Einhaltung von Umweltschutzanforderungen leichter möglich.

Ein Ausführungsbeispiel der Erfindung ist in der Zeichnung dargestellt und wird anhand der Figuren nachfolgend näher erläutert.

Im Einzelnen zeigen
Fig. 1 a und b eine schematische Seitenansicht eines erfindungsgemäßen Kompaktdumpers mit Stützrad in Fahrposition und in Stützposition,
Fig. 1c eine schematische Seitenansicht eines erfindungsgemäßen Kompaktdumpers gemäß den Fig. 1 a und b mit Stützrad in Stützposition und in der Kippposition der Lastaufnahme,
Fig. 2 a und b schematische Seitenansichten zur Veranschaulichung der charakteristischen Lastaufnahme von Kipperfahrzeugen oder Dumpern,
Fig. 3 a, b und c schematische Darstellungen der Knicklenkung unter Einbezug einer dritten, gelenkten Radachse und
Fig. 4 eine Hydraulikschema zum Antrieb einer Lenkung gemäß den Fig. 3 a, b und c.

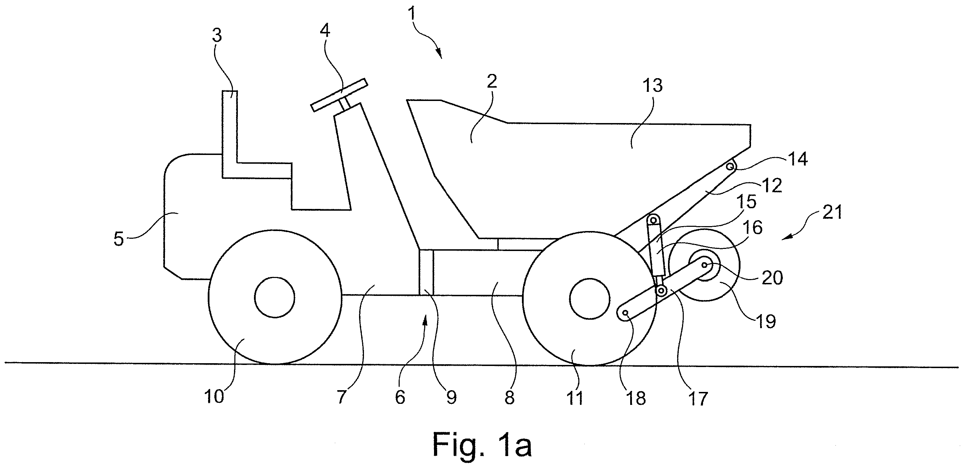

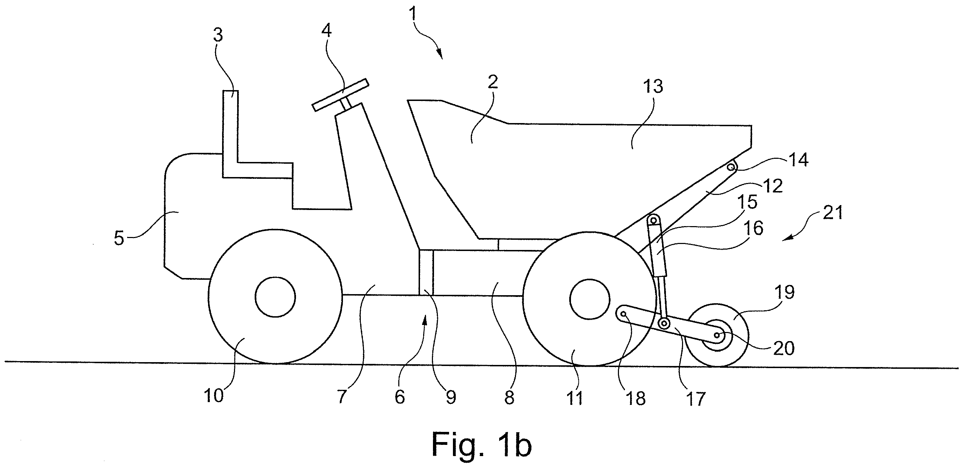

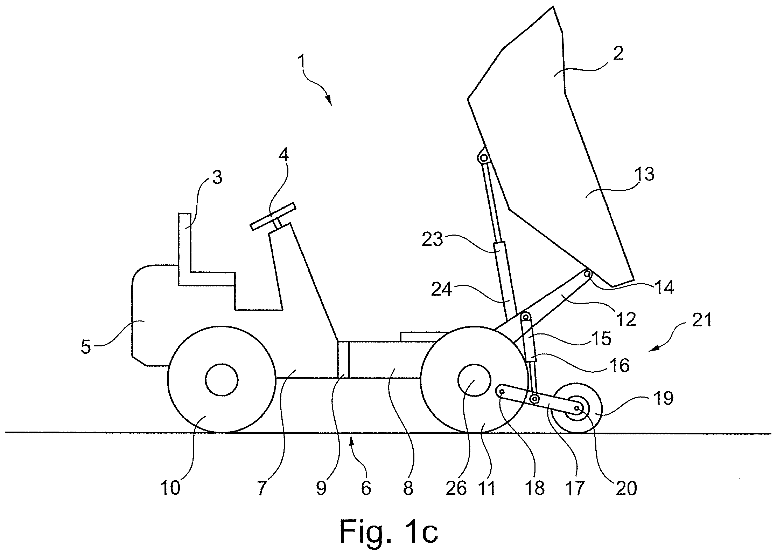

Das Fahrzeug 1 gemäß den o.a. Figuren 1 a und b ist als sogenannter Kompaktdumper oder Kompaktmuldenkipper ausgeführt, bei dem eine Lastaufnahme 2 in Fahrtrichtung vorne angeordnet ist. Hinter der Lastaufnahme 2 befindet sich ein Fahrersitz 3 in dieser Ausführung ohne Fahrerkabine ein Lenkrad 4 und ein Motorraum 5. Die weiteren Betätigungselemente sind nicht näher dargestellt.

Ein Rahmen 6 umfasst eine erste Rahmeneinheit 7 und eine zweite Rahmeneinheit 8, die gelenkig über eine Knickachse 9 verbunden sind. Ein erstes Laufrad 10 und ein zweites Laufrad 11 sind mit den jeweiligen Rahmeneinheiten verbunden. Dieser Aufbau ergibt einen sogenannten Knicklenker, wobei sich anstelle der Knickachse 9 oft Gelenke finden, die zur Verbesserung der Geländetauglichkeit zusätzlich eine Schwenkbewegung um eine horizontale Achse sowie eine Verschränkung der Radachsen erlauben. Dies ist beispielsweise durch ein oder mehrere Kugelgelenke oder Kardangelenke in Kombination mit entsprechenden Führungen und/oder Antriebselementen möglich.

Die vordere zweite Rahmeneinheit 8 ist mit einem Rahmenausleger 12 versehen, an dem die als Mulde 13 ausgebildete Lastaufnahme 2 über eine Muldenachse 14 kippfähig gelagert ist.

Eine anspruchsgemäße zweite Verstelleinheit 15 ist als Hubzylinder 16 ausgebildet und erlaubt die Verstellung eines Stützarms 17 um eine Schwenkachse 18. In den Figuren 1 a bis c ist eine Ausführung mit einem Stützrad 19 gezeigt, das um eine dritte Radachse 20 drehbar ist.

Fig. 1a zeigt eine angehobene Fahrposition des Stützrades 19, während Fig. 1b eine abgesenkte Stützposition zeigt. In der Stützposition nach dieser Darstellung ist das Stützrad 19 auf dem Boden abgestützt. So kann sich das Fahrzeug mit dem Stützrad 19 bewegen und wird dennoch gegen unerwünschtes Verkippen gesichert.

Der Schwenkarm 17 ist in den gezeigten Darstellungen durchgehend sichtbar gezeichnet. Er ist jedoch nicht am zweiten Laufrad 11 angelenkt, wie die Zeichnung vermuten lässt, da sonst die Funktion beider Elemente nicht möglich wäre. Die Schwenkachse 18 befindet sich tatsächlich an der Rahmeneinheit 8 und wäre bei realistischer Darstellung ebenso wie der hintere Teil des Stützarms 17 und Teile des Zylinders 16 verdeckt durch das Laufrad 11.

Eine Lenkung ist nicht näher dargestellt. Diese kann in einer einfachen Variante als Nachlaufrad verwirklicht werden. Es kann jedoch auch eine geführte und/oder angetriebene Ausführung ausgebildet werden.

Ist die Aufhängung und Lenkung fahrtauglich, z. B auch straßentauglich ausgebildet, so kann neben der Stützfunktion auch eine Verbesserung der Achslastverteilung des Fahrzeugs und damit gegebenenfalls eine Erhöhung der Nutzlast erzielt werden.

In Fig. 1c ist zudem die Kippposition der Lastaufnahme 2 bzw. der Mulde 13 ersichtlich. Hier ist die Lastaufnahme 2 über das Laufrad 11 nach vorne in den vorderseitigen Randbereich verschwenkt. Dies wird durch eine anspruchsgemäße erste Verstelleinheit 22 erreicht, die in dieser Ausführung als Hubzylinder 23 ausgebildet ist.

In der Kippposition wird die Stütz- und Sicherheitsfunktion der Stützeinheit 21 deutlich, die ein unerwünschtes Verkippen des Fahrzeugs 1 über das Laufrad 11 und dessen Radachse 26 verhindert.

Diese Stützeinheit 21 umfasst je nach Ausführung die zweite Verstelleinheit 15 bzw. den Hubzylinder 16, den Stützarm 17, die Schwenkachse 18 und das dritte Stützrad mit dritter Radachse.

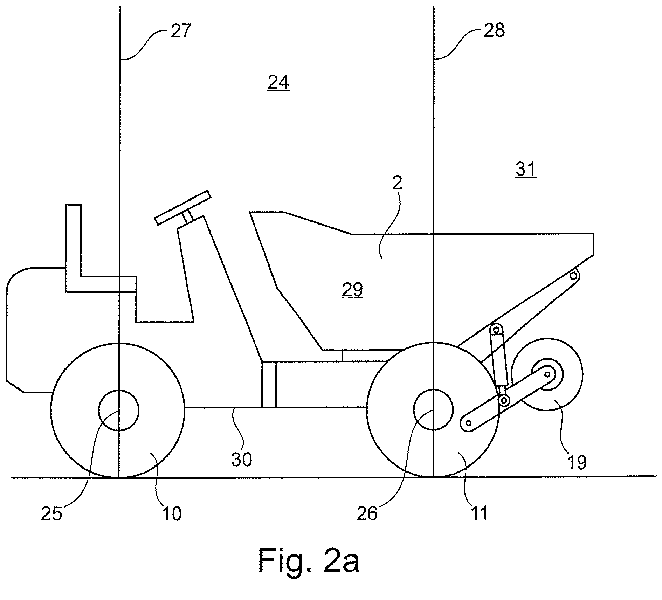

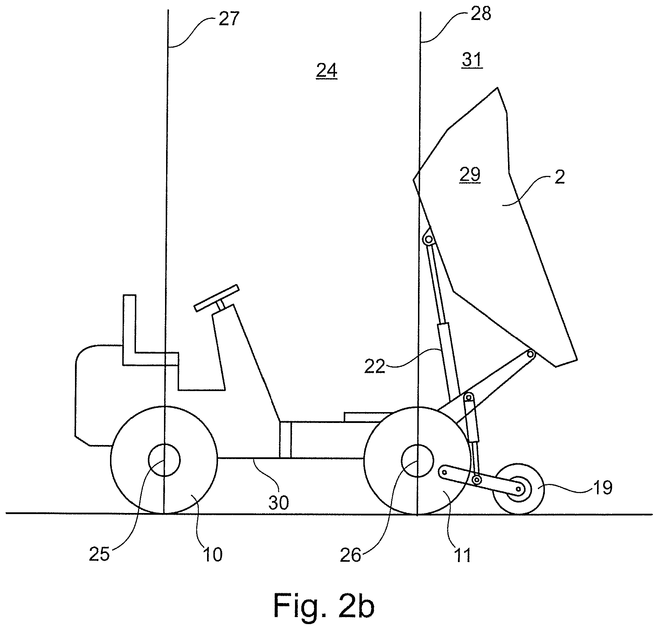

In Fig. 2 a und b ist ein Zwischenbereich 24 oberhalb der beiden Radachsen 25,26 der Laufräder 10,11 zeichnerisch dargestellt, in dem typischerweise bei Kipperfahrzeugen oder Dumpern ein erheblicher Anteil der transportierten Ladung in Form der dargestellten Teillast 29 in der Fahrposition der Lastaufnahme 2 angeordnet ist, der durch senkrecht zu einer Verbindungslinie 30 zwischen den Radachsen 25,26 stehende Begrenzungsebenen 27,28 definiert ist. In der Kippposition wird dieser Lastanteil über das Laufrad 11 in den Randbereich 31 verschwenkt, der auf der dem Laufrad 11 benachbarten Seite der Begrenzungsebene 28 beginnt. Durch diese Schwerpunktsveränderung ergibt sich die mit der Erfindung zu verbessernde Situation der Stand- und Fahrsicherheit.

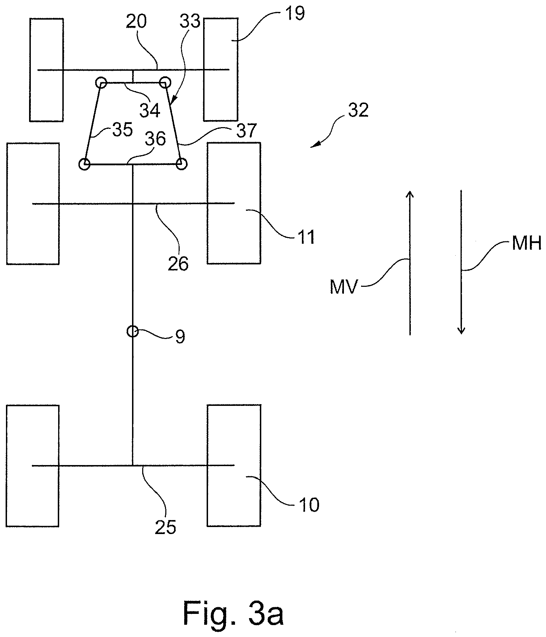

Fig. 3a zeigt eine schematische Draufsicht auf die Lenkungsvorrichtung 32 für ein Fahrzeug mit Knicklenkung nach den o.a. Figuren unter Verwendung von zwei Stützrädern 19 in Geradeausfahrt.

Die erste Radachse und die zweite Radachse sind schwenkbar um die Knickachse 9 angeordnet. Die dritte Radachse 20 ist über eine Trapezlenkeranordnung 33 aus vier gelenkig verbundenen Stablenkern, d.h. zwei Parallellenkern 34, 36 und zwei Schräglenkern 35, 37 schwenkbar befestigt.

Die dargestellte Anordnung kann bei beiden Fahrtrichtungen verwendet werden. Die Fahrtrichtung mit vorne angeordneter Mulde 13 ist mit dem Pfeil MV, die Fahrtrichtung mit hinten angeordneter Mulde mit dem Pfeil MH markiert.

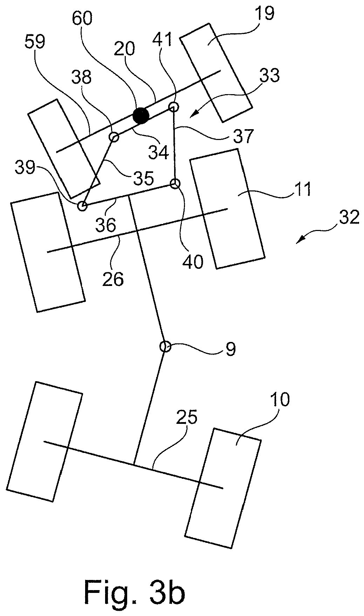

In Fig. 3b ist die gleiche Anordnung in einer Linkskurve bezogen auf die Fahrtrichtung MV mit vorn angeordneter Mulde 13 gezeigt. Aus der Trapezanordnung der Parallellenker 34, 36 und der Schräglenker 35, 37 ist eine schiefes Parallelogramm geworden, da die Lenker um ihre Gelenkachsen 38, 39,40, 41 verdreht sind. Wie in dieser Figur erkennbar dreht dabei die dritte Radachse soweit ein, dass das kurveninnere Stützrad 19 In den Zwischenraum zwischen den zweiten Laufrädern 11 einfährt. Weiterhin ist ersichtlich, dass zu diesem Zweck die dritte Radachse 20 kürzer als die zweite Radachse 26 ausgebildet ist. In Fig. 3b ist beispielhaft die dritte Radachse 20 als Pendelachse 59 mit einem Pendelgelenk 60 dargestellt. Diese Ausführung weist eine verbesserte Geländetauglichkeit auf, da eine Achsverschränkung der Dritten Radachse 20 möglich ist.

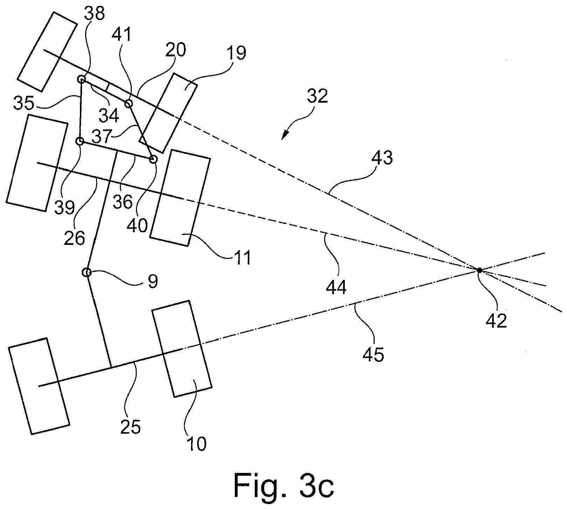

In der Darstellung der Rechtskurve gemäß Fig. 3c ist neben der spiegelbildlichen Anordnung im Vergleich zu Fig. 3b erkennbar, das sich die Verlängerungslinien 43, 44, 45 der Radachsen 20, 25, 26 in einem Schnittpunkt 42 treffen, wodurch die Fahrkurve jeder Achse einem Kreis um den Mittelpunkt 42 entspricht. Hierdurch ergibt sich eine schlupffreie Fahrt aller Laufräder.

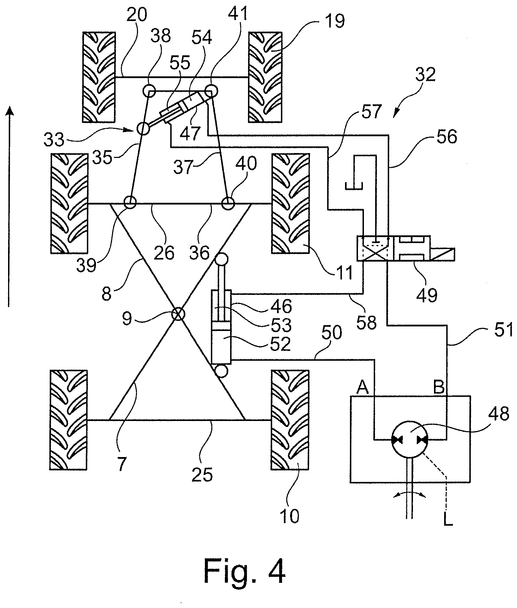

In Figur 4 ist die hydraulische Kopplung der Lenkungsanordnung 32 veranschaulicht. Zu den bereits beschriebenen Komponenten kommen nunmehr noch ein Hauptlenkzylinder 46, ein Zusatzlenkzylinder 47, eine Lenkungspumpe 48, ein Lenkungsventil 49 und zwei Leitungen 50, 51 hinzu. Die Leitung 50 verbindet die Lenkungspumpe mit der Kolbenseite des Hauptlenkzylinders 46. Die Leitung 51 verbindet die Lenkungspumpe über das Lenkungsventil 49 und eine weitere Leitung 56 mit der Kolbenseite 54 des Zusatzlenkzylinders 47. Die Stangenseite 55 des Zusatzlenkzylinders 47 ist über eine Leitung 57 mit dem Lenkungsventil 49 verbunden. Weiterhin verbindet eine Leitung 58 das Lenkungsventil mit der Stangenseite 53 des Hauptlenkzylinders.

Wird die Leitung 50 von der Lenkungspumpe mit Druck beaufschlagt, so fährt der Hauptlenkzylinder aus, wodurch die Rahmeneinheiten 7, 8 nach links um die Knickachse 9 einschwenken. Über die Stangenseite 53 des Hauptlenkzylinders 46 wird zugleich die Leitung 58 mit Druck und in der Folge über das Lenkungsventil 49 und die Leitung 56 die Kolbenseite 57 des Zusatzlenkzylinders 47 beaufschlagt.

Dadurch fährt auch der Zusatzlenkzylinder 47 aus, wodurch sich die Trapezlenkeranordnung 33 in die Stellung nach Fig. 3b begibt und die Kurvenfahrt nach links bezogen auf die Fahrtrichtung MV mit vorn angeordneter Mulde 13 einstellt.

Der Hydraulikkreislauf ist über Stangenseite des Zusatzlenkzylinders 47, die Leitung 57, das Lenkungsventil 49 und die Leitung 51 geschlossen.

Bei Druckbeaufschlagung der Leitung 51 durch die Lenkungspumpe 48 ergibt sich dementsprechend die entgegengesetzte Einstellung der Rechtskurve gemäß Fig. 3c. Über die Lenkergeometrie der Trapezlenkeranordnung 33 und die Querschnitte und/oder die Länge der Hydraulikzylinder 46, 47 werden die Lenkwinkel im Wesentlichen so eingestellt, dass bevorzugt ein gemeinsamer Schnittpunkt 42 durch die Verlängerungslinien 43, 44, 45 getroffen wird, bzw. die Schnittpunkte der Verlängerungslinien 43, 44, 45 räumlich nahe beieinander liegen.

Die gezeigte hydraulische Kopplung bewirkt eine angetriebene Lenkung für die Stützeinheit 21. Falls die Hauptlenkung bzw. die Knicklenkung der ersten und zweiten Radachse anderweitig angetrieben ist, kann eine hydraulische Kopplung der dargestellten Art auch ohne die Lenkungspumpe bei geschlossenen Hydraulikkreislauf bewirkt werden.

Bei Fahrtrichtung MH mit hinten angeordneter Mulde und Stützeinheit 26 kann die Lenkung der Stützeinheit in der dargestellten Trapezlenkeranordnung 33 auch als reine Nachlauflenkung ohne hydraulische Kopplung betrieben werden.

### Bezugszeichenliste

- 1: Fahrzeug
- 2: Lastaufnahme
- 3: Fahrersitz
- 4: Lenkrad
- 5: Motorraum
- 6: Rahmen
- 7: erste Rahmeneinheit
- 8: zweite Rahmeneinheit
- 9: Knickachse
- 10: Erstes Laufrad
- 11: Zweites Laufrad
- 12: Rahmenausleger
- 13: Mulde
- 14: Muldenachse
- 15: Zweite Verstelleinheit
- 16: Hubzylinder
- 17: Stützarm
- 18: Schwenkachse
- 19: Stützrad
- 20: Dritte Radachse
- 21: Stützeinheit
- 22: Erste Verstelleinheit
- 23: Erster Hubzylinder
- 24: Zwischenbereich
- 25: Erste Radachse
- 26: Zweite Radachse
- 27: Begrenzungsebene
- 28: Begrenzungsebene
- 29: Teillast
- 30: Verbindungslinie
- 31: Randbereich
- 32: Lenkungsvorrichtung
- 33: Trapezlenkeranordnung
- 34: Parallellenker
- 35: Schräglenker
- 36: Parallellenker
- 37: Schräglenker
- 38: Gelenkachse
- 39: Gelenkachse
- 40: Gelenkachse
- 41: Gelenkachse
- 42: Schnittpunkt
- 43: Verlängerungslinie
- 44: Verlängerungslinie
- 45: Verlängerungslinie
- 46: Hauptlenkzylinder
- 47: Zusatzlenkzylinder
- 48: Lenkungspumpe
- 49: Lenkungsventil
- 50: Leitung
- 51: Leitung
- 52: Kolbenseite
- 53: Stangenseite
- 54: Kolbenseite
- 55: Stangenseite
- 56: Leitung
- 57: Leitung
- 58: Leitung
- 59: Pendelachse
- 60: Pendelgelenk

- MV: Fahrtrichtung mit Mulde vorn
- MH: Fahrtrichtung mit Mulde hinten

## Patentansprüche

1. Fahrzeug (1), insbesondere Transportfahrzeug, mit einem Fahrzeugrahmen und einem Antriebsmotor, insbesondere Verbrennungsmotor und/oder Elektromotor und/oder Hydraulikmotor, wobei ein Fahrzeugrahmen (6) und wenigstens zwei Radachsen (25, 26) vorgesehen sind und der Fahrzeugrahmen (6) wenigstens eine mit einer ersten Verstelleinheit (22) um eine Kippachse verschwenkbare Lastaufnahme (2) wie eine Mulde (13) oder dergleichen zum Aufnehmen/Speichern von Material, insbesondere von schüttbarem Baumaterial umfasst, wobei die Lastaufnahme (2) in Transport- oder Fahrtstellung wenigstens teilweise in einem Zwischenbereich (24) zwischen den zwei Radachsen (25, 26) angeordnet und in eine Kippstellung wenigstens teilweise über eine der Radachsen (26) hinweg in einen Randbereich (31) des Fahrzeugs (1) schwenkbar ist, wobei der Rahmen (6) wenigstens eine Stützeinheit (21) mit wenigstens einem um eine dritte Radachse (20), insbesondere eine dritte Starrachse, drehbaren Stützrad (19) zum Abstützen des Fahrzeugs (1) bzw. des Fahrzeugrahmens (6) umfasst, Z **dadurch gekennzeichnet, dass** das wenigstens eine Stützrad 19 lenkbar ausgebildet ist.

2. Fahrzeug nach Anspruch 1, **dadurch gekennzeichnet, dass** das Fahrzeug wenigstens eine erste Rahmeneinheit (7) und eine zweite Rahmeneinheit (8) aufweist, wobei die erste Rahmeneinheit (7) wenigstens eine erste Radachse (25), insbesondere eine erste Starrachse, mit wenigstens zwei ersten Laufrädern (10) und die zweite Rahmeneinheit (8) wenigstens eine zweite Radachse (26), insbesondere eine zweite Starrachse, mit wenigstens zwei zweiten Laufrädern (11) umfasst und eine Knicklenkung oder Rahmenlenkung zum Lenken des Fahrzeugs bzw. der Fahrzeugrahmeneinheiten zwischen den beiden Rahmeneinheiten (7, 8) aufweist, wobei eine der Radachsen (25, 26) zwischen dem Stützrad (19) der Stützeinheit (21) und der Knickachse (9) der Knick- oder Rahmenlenkung angeordnet ist und wobei wenigstens eine Zusatzlenkung zum Lenken des/der Stützräder (19) vorgesehen ist.

3. Fahrzeug nach einem der vorgenannten Ansprüche, **dadurch gekennzeichnet, dass** die Zusatzlenkung als ZusatzKnicklenkung/Rahmenlenkung ausgebildet ist.

4. Fahrzeug nach einem der vorgenannten Ansprüche, **dadurch gekennzeichnet, dass** zwei Stützräder (19) an einer dritten Radachse (20) vorgesehen sind.

5. Fahrzeug nach einem der vorgenannten Ansprüche, **dadurch gekennzeichnet, dass** die dritte Radachse (20) als dritte Starrachse ausgebildet ist.

6. Fahrzeug nach einem der vorgenannten Ansprüche, **dadurch gekennzeichnet**, das die dritte Radachse als Pendelachse (59) mit einem Pendelgelenk (60) ausgebildet ist.

7. Fahrzeug nach einem der vorgenannten Ansprüche, **dadurch gekennzeichnet, dass** die Zusatzlenkung der dritten Radachse (20) wenigstens eine Trapezlenkeranordnung (33) in Form einer eine gelenkigen Stablenker-Anordnung in Trapez-Geometrie mit wenigstens zwei in Trapezanordnung mit einer Rahmeneinheit und der dritten Starrachse verbundenen Stablenkern (34, 35, 36, 37) umfasst, wobei zwischen den Stablenkern und/oder einem Stablenker und der Rahmeneinheit bzw. der dritten Starrachse jeweils eine Lenkgelenk, insbesondere eine Gelenkachse (38, 39, 40, 41) angeordnet ist.

8. Fahrzeug nach einem der vorgenannten Ansprüche, **dadurch gekennzeichnet, dass** eine Kopplungsvorrichtung zur Kopplung der Zusatzknicklenkung mit der Knicklenkung des Fahrzeugs derart vorgesehen ist, dass beim Lenken die dritte Radachse (20) auf den Schnittpunkt (42) der Verlängerung der beiden anderen Radachsen (25, 26) ausgerichtet ist.

9. Fahrzeug nach einem der vorgenannten Ansprüche, **dadurch gekennzeichnet, dass** die Zusatzknicklenkung und die Fahrzeuglenkung jeweils einen Hydraulikzylinder als Antrieb aufweisen, die hydraulisch gekoppelt sind.

10. Fahrzeug nach einem der vorgenannten Ansprüche, **dadurch gekennzeichnet, dass** wenigstens eine zweite Verstelleinheit (15) zum Verstellen oder Ändern einer Schwenkposition und/oder zum Verstellen einer Länge der Stützeinheit (21) und/oder zum Verstellen oder Ändern einer Stützkraft vorgesehen ist.

11. Fahrzeug nach einem der vorgenannten Ansprüche, **dadurch gekennzeichnet, dass** wenigstens ein Neigungssensor zur Erfassung der Fahrzeuglage, insbesondere der Fahrzeugneigung und/oder wenigstens ein Sensor zur Erfassung der Kippstellung der Lastaufnahme, insbesondere zur Erfassung eines Kippzylinderdrucks und/oder wenigstens ein Drucksensor zur Erfassung eines Bremszylinderdrucks und/oder wenigstens ein Kraftsensor, insbesondere Kraftmessbolzen oder Dehnungsmessstreifen zur Erfassung der einer Achsentlastung vorgesehen sind.

12. Fahrzeug nach einem der vorgenannten Ansprüche, **dadurch gekennzeichnet, dass** eine automatische Steuereinheit vorgesehen ist, die die zweite Verstelleinheit (15) abhängig von einem Zylinderdruck der ersten Verstelleinheit (22) und/oder von der Maschinenneigung und/oder einer Bremsverzögerung bzw. einem Bremsdruck in der Bremseinheit des Fahrzeugs (1) und/oder einer Achsentlastung oder Achsbelastung betätigt, insbesondere die Stützkraft erhöht.

13. Fahrzeug nach einem der vorgenannten Ansprüche, **dadurch gekennzeichnet, dass** die zweite Verstelleinheit (15) einen Betriebsmodus als hydropneumatische Federung aufweist.

14. Fahrzeug nach einem der vorgenannten Ansprüche, **dadurch gekennzeichnet, dass** die automatische Steuereinheit bei Erreichen einer Endstellung im Betriebsmodus der zweiten Verstelleinheit (15) als hydropneumatische Federung bei Erreichen einer Endstellung des Federwegs bzw. des Verstellweges der zweiten Verstelleinheit (15) den Fahrantrieb wenigstens in eine Fahrtrichtung stoppt.

15. Fahrzeug nach einem der vorgenannten Ansprüche, **dadurch gekennzeichnet, dass** die Länge der dritten Radachse (20) kürzer ist als die Länge der zur dritten Radachse benachbarten Radachse (26).

16. Fahrzeug nach einem der vorgenannten Ansprüche, **dadurch gekennzeichnet, dass** wenigstens ein Hilfsantriebsmotor zum Antreiben wenigstens eines Stützrades (19) und/oder eine Hilfsbremse zum Bremsen wenigstens eines Stützrades (19) vorgesehen ist.

17. Fahrzeug nach einem der vorgenannten Ansprüche, **dadurch gekennzeichnet, dass** der Hilfsantriebsmotor als Hydraulik- oder als Elektromotor ausgebildet ist.

## Claims

1. Vehicle (1), in particular transport vehicle, having a vehicle frame and a drive motor, in particular internal combustion engine and/or electric motor and/or hydraulic motor, wherein a vehicle frame (6) and at least two wheel axles (25, 26) are provided, and the vehicle frame (6) comprises at least one load holder (2) which is pivotable by a first adjustment unit (22) about a tilting axis, such as a skip (13) or the like for holding/storing material, in particular pourable construction material, wherein the load holder (2) is at least partially arranged in an intermediate region (24) between the two wheel axles (25, 26) in a transporting or travel position and is at least partially pivotable beyond one of the wheel axles (26) into an edge region (31) of the vehicle (1) into a tilting position, wherein the frame (6) comprises at least one support unit (21) having at least one support wheel (19) which is rotatable about a third wheel axle (20), in particular a third rigid axle, for supporting the vehicle (1) or the vehicle frame (6), **characterized in that** the at least one support wheel (19) is steerable.

2. Vehicle according to Claim 1, **characterized in that** the vehicle has at least one first frame unit (7) and one second frame unit (8), the first frame unit (7) comprising at least one first wheel axle (25), in particular a first rigid axle, with at least two first running wheels (10), and the second frame unit (8) comprising at least one second wheel axle (26), in particular a second rigid axle, with at least two second running wheels (11), and has an articulated steering system or frame steering system for steering the vehicle or the vehicle frame units between the two frame units (7, 8), wherein one of the wheel axles (25, 26) is arranged between the support wheel (19) of the support unit (21) and the articulation axle (9) of the articulated or frame steering system, and wherein at least one additional steering system for steering the support wheel/support wheels (19) is provided.

3. Vehicle according to either of the preceding claims, **characterized in that** the additional steering system is designed as an additional articulated steering system/frame steering system.

4. Vehicle according to one of the preceding claims, **characterized in that** two support wheels (19) are provided on a third wheel axle (20).

5. Vehicle according to one of the preceding claims, **characterized in that** the third wheel axle (20) is designed as a third rigid axle.

6. Vehicle according to one of the preceding claims, **characterized in that** the third wheel axle is designed as a swivel axle (59) with a swivel joint (60).

7. Vehicle according to one of the preceding claims, **characterized in that** the additional steering system of the third wheel axle (20) comprises at least one trapezoidal link arrangement (33) in the form of an articulated rod link arrangement in trapezoidal geometry with at least two rod links (34, 35, 36, 37) connected in a trapezoidal arrangement to a frame unit and to the third rigid axle, wherein a steering joint, in particular a joint axle (38, 39, 40, 41) is arranged in each case between the rod links and/or one rod link and the frame unit or the third rigid axle.

8. Vehicle according to one of the preceding claims, **characterized in that** a coupling device for coupling the additional articulated steering system to the articulated steering system of the vehicle is provided in such a manner that, during steering, the third wheel axle (20) is aligned with the intersecting point (42) of the extension of the two other wheel axles (25, 26).

9. Vehicle according to one of the preceding claims, **characterized in that** the additional articulated steering system and the vehicle steering system each have a hydraulic cylinder as drive, the hydraulic cylinders being hydraulically coupled.

10. Vehicle according to one of the preceding claims, **characterized in that** at least one second adjustment unit (15) for adjusting or changing a pivoting position and/or for adjusting a length of the support unit (21) and/or for adjusting or changing a support force is provided.

11. Vehicle according to one of the preceding claims, **characterized in that** at least one inclination sensor for detecting the position of the vehicle, in particular the inclination of the vehicle, and/or at least one sensor for detecting the tilting position of the load holder, in particular for detecting a tilting cylinder pressure, and/or at least one pressure sensor for detecting a brake cylinder pressure, and/or at least one force sensor, in particular force measurement bolt or strain gauge for detecting the relieving an axle of load are provided.

12. Vehicle according to one of the preceding claims, **characterized in that** an automatic control unit is provided which actuates the second adjustment unit (15) depending on a cylinder pressure of the first adjustment unit (22) and/or on the inclination of the machine and/or on braking deceleration and/or a brake pressure in the brake unit of the vehicle (1) and/or on relieving an axle of load or loading an axle, in particular increases the support force.

13. Vehicle according to one of the preceding claims, **characterized in that** the second adjustment unit (15) has an operating mode as hydropneumatic suspension.

14. Vehicle according to one of the preceding claims, **characterized in that** the automatic control unit stops the drive at least in one direction of travel when an end position is reached in the operating mode of the second adjustment unit (15) as hydropneumatic suspension, or when an end position of the spring travel or of the adjustment travel of the second adjustment unit (15) is reached.

15. Vehicle according to one of the preceding claims, **characterized in that** the length of the third wheel axle (20) is shorter than the length of the wheel axle (26) adjacent to the third wheel axle.

16. Vehicle according to one of the preceding claims, **characterized in that** at least one auxiliary drive motor for driving at least one support wheel (19) and/or an auxiliary brake for braking at least one support wheel (19) is provided.

17. Vehicle according to one of the preceding claims, **characterized in that** the auxiliary drive motor is designed as a hydraulic motor or as an electric motor.

## Revendications

1. Véhicule (1), notamment véhicule de transport, comprenant un châssis de véhicule et un moteur d'entraînement, notamment un moteur à combustion interne et/ou un moteur électrique et/ou un moteur hydraulique, un châssis de véhicule (6) et au moins deux essieux (25, 26) étant prévus et le châssis de véhicule (6) comprenant au moins un récepteur de charge (2), tel qu'une benne (13) ou similaire, pouvant pivoter autour d'un axe de basculement avec une première unité de réglage (22) pour la réception/le stockage de matériau, notamment de matériau de construction en vrac, le récepteur de charge (2), en position de transport ou de conduite, étant agencé au moins partiellement dans une zone intermédiaire (24) entre les deux essieux (25, 26) et, dans une position de basculement, pouvant pivoter au moins partiellement au-delà de l'un des essieux (26) dans une zone de bord (31) du véhicule (1),
le châssis (6) comprenant au moins une unité de support (21) avec au moins une roue de support (19) pouvant tourner autour d'un troisième essieu (20), notamment un troisième essieu rigide, pour supporter le véhicule (1) ou le châssis de véhicule (6),
**caractérisé en ce que**
l'au moins une roue de support (19) est configurée sous forme dirigeable.

2. Véhicule selon la revendication 1, **caractérisé en ce que** le véhicule présente au moins une première unité de châssis (7) et une deuxième unité de châssis (8), la première unité de châssis (7) comprenant au moins un premier essieu (25), notamment un premier essieu rigide, avec au moins deux premières roues de roulement (10) et la deuxième unité de châssis (8) comprenant au moins un deuxième essieu (26), notamment un deuxième essieu rigide, avec au moins deux deuxièmes roues de roulement (11), et présente une direction articulée ou une direction de châssis pour diriger le véhicule ou les unités de châssis de véhicule entre les deux unités de châssis (7, 8), l'un des essieux (25, 26) étant agencé entre la roue de support (19) de l'unité de support (21) et l'axe d'articulation (9) de la direction articulée ou de châssis, et au moins une direction supplémentaire étant prévue pour diriger la/les roues de support (19).

3. Véhicule selon l'une quelconque des revendications précédentes, **caractérisé en ce que** la direction supplémentaire est configurée sous forme de direction articulée/direction de châssis supplémentaire.

4. Véhicule selon l'une quelconque des revendications précédentes, **caractérisé en ce que** deux roues de support (19) sont prévues sur un troisième essieu (20).

5. Véhicule selon l'une quelconque des revendications précédentes, **caractérisé en ce que** le troisième essieu (20) est configuré sous forme de troisième essieu rigide.

6. Véhicule selon l'une quelconque des revendications précédentes, **caractérisé en ce que** le troisième essieu est configuré sous forme d'essieu oscillant (59) avec une articulation oscillante (60).

7. Véhicule selon l'une quelconque des revendications précédentes, **caractérisé en ce que** la direction supplémentaire du troisième essieu (20) comprend au moins un agencement de bras trapézoïdal (33) sous la forme d'un agencement de bras en barre articulé en géométrie trapézoïdale avec au moins deux bras en barre (34, 35, 36, 37) reliés en agencement trapézoïdal à une unité de châssis et au troisième essieu rigide, une articulation de direction, notamment un axe d'articulation (38, 39, 40, 41) étant respectivement agencé entre les bras de barre et/ou un bras de barre et l'unité de châssis ou le troisième essieu rigide.

8. Véhicule selon l'une quelconque des revendications précédentes, **caractérisé en ce qu'**un dispositif de couplage pour coupler la direction articulée supplémentaire à la direction articulée du véhicule est prévu de telle sorte que, lors de la direction, le troisième essieu (20) est aligné sur le point d'intersection (42) de la prolongation des deux autres essieux (25, 26).

9. Véhicule selon l'une quelconque des revendications précédentes, **caractérisé en ce que** la direction articulée supplémentaire et la direction de véhicule présentent chacune un cylindre hydraulique en tant qu'entraînement, qui sont couplés hydrauliquement.

10. Véhicule selon l'une quelconque des revendications précédentes, **caractérisé en ce qu'**au moins une deuxième unité de réglage (15) est prévue pour régler ou modifier une position de pivotement et/ou pour régler une longueur de l'unité de support (21) et/ou pour régler ou modifier une force de support.

11. Véhicule selon l'une quelconque des revendications précédentes, **caractérisé en ce qu'**au moins un capteur d'inclinaison pour détecter la position du véhicule, notamment l'inclinaison du véhicule et/ou au moins un capteur pour détecter la position de basculement du récepteur de charge, notamment pour détecter une pression de cylindre de basculement et/ou au moins un capteur de pression pour détecter une pression de cylindre de frein et/ou au moins un capteur de force, notamment des broches de mesure de force ou des jauges de contrainte pour détecter une décharge d'essieu sont prévus.

12. Véhicule selon l'une quelconque des revendications précédentes, **caractérisé en ce qu'**une unité de commande automatique est prévue, qui actionne la deuxième unité de réglage (15) en fonction d'une pression de cylindre de la première unité de réglage (22) et/ou de l'inclinaison de la machine et/ou d'un retard de freinage ou d'une pression de freinage dans l'unité de freinage du véhicule (1) et/ou d'une décharge d'essieu ou d'une charge d'essieu, notamment augmente la force de support.

13. Véhicule selon l'une quelconque des revendications précédentes, **caractérisé en ce que** la deuxième unité de réglage (15) présente un mode de fonctionnement en tant que suspension hydropneumatique.

14. Véhicule selon l'une quelconque des revendications précédentes, **caractérisé en ce que** l'unité de commande automatique arrête l'entraînement de conduite au moins dans une direction de conduite lorsqu'une position finale est atteinte dans le mode de fonctionnement de la deuxième unité de réglage (15) en tant que suspension hydropneumatique, lorsqu'une position finale de la course de ressort ou de la course de réglage de la deuxième unité de réglage (15) est atteinte.

15. Véhicule selon l'une quelconque des revendications précédentes, **caractérisé en ce que** la longueur du troisième essieu (20) est inférieure à la longueur de l'essieu (26) voisin du troisième essieu.

16. Véhicule selon l'une quelconque des revendications précédentes, **caractérisé en ce qu'**au moins un moteur d'entraînement auxiliaire pour entraîner au moins une roue de support (19) et/ou un frein auxiliaire pour freiner au moins une roue de support (19) est prévu.

17. Véhicule selon l'une quelconque des revendications précédentes, **caractérisé en ce que** le moteur d'entraînement auxiliaire est configuré sous forme de moteur hydraulique ou électrique.
